# DEMANDE DE BREVET EUROPEEN

(11) **EP 2 907 687 A1**
(43) Date de publication de la demande: **19.08.2015**
(21) Numéro de dépôt: 14000542.2
(22) Date de dépôt: 15.02.2014
(51) Int. Cl.: B60L 8/00, H02P 7/00

(54) **Moteur hors-bord autonome**

(71) Demandeur: Fortil Marine, 83500 La Seyne Sur Mer (FR)
(72) Inventeur: Remini, Olivier, 83500 La Seyne sur Mer (FR)

(57) **Abrégé**

La présente invention concerne un nouveau concept de moteur à énergie solaire Fortil Marine -SL-ONE.

De manière connue ,le Moteur comprend un moteur électrique propulseur équipé d'une hélice ,d'un support de fixation ,d'un sélecteur de vitesse à variateur (avant et arrière).

La nouveauté le carter inférieur est équipé d'une batterie amovible et d'un panneau solaire dissociable et d'une carte électronique qui perfectionne le rendement et le fonctionnement des rotacteurs standarts utilisés par la plupart des moteurs hors-bords électrique

Ce type de moteur hors -bord est destiné à la propulsion des annexes de 2,50 maximum dans les zones de plages et port lorsque le bateau et au mouillage

## Description

La présente invention concerne un nouveau concept de moteur à énergie solaire Fortil Marine - SL-One. Ce moteur hors-bord est destiné principalement au monde marin. La nouveauté consiste en trois points primordiaux : la revendication d'un moteur autonome à énergie solaire, le couplage de l'électronique propriétaire avec le rotacteur standard et le concept d'éléments intégrables et amovibles sur un moteur électrique (batterie, et panneaux solaires).

Ce moteur s'adresse à des plaisanciers, des pêcheurs, des institutionnels, des loueurs de bateaux ou tout utilisateur maritime d'embarcations transportant des personnes ou des marchandises. Les contraintes des utilisateurs de la mer sont aujourd'hui multiples. La première contrainte est évidement énergétique. Les moteurs thermiques sont consommateurs d'énergie polluante et le rapport puissance/consommation nécessite un retour fréquent à une base de ravitaillement en énergie. La maintenance d'un moteur thermique est aussi une des contraintes pour des utilisations saisonnières. Nous avons opté pour l'utilisation d'un moteur électrique qui correspond aujourd'hui aux normes environnementales qui sont en train de se développer dans de nombreux bassins de navigation. Pour approvisionner ce moteur, nous donnons la possibilité d'intégrer une ou plusieurs batteries très hautes performances et un panneau solaire qui pourra venir s'intégrer sur le moteur. Nous répondons ainsi à une forte contrainte d'encombrement avec des éléments dissociables.

Les éléments suivants présentent une estimation en l'état des technologies de batteries, de panneaux, et de motorisations électriques. Ils nous ont permis de définir les puissances et l'autonomie atteignables. Cette estimation a défini les applications actuelles et aussi à venir. Le cahier des charges concernent des panneaux solaires de 1 m2 maximum, un poids global de 20 kg maximum et une motorisation minimum de 180 watt correspondant au transport d'une embarcation de 2.5m avec 160 kg à 2 noeuds.

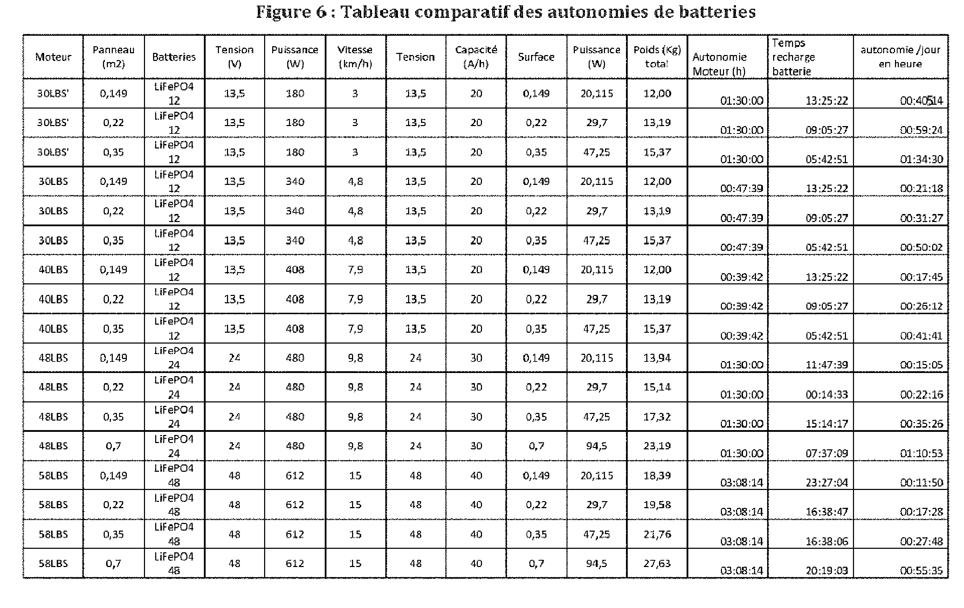

Le tableau figure 6 présente le tableau comparatif des autonomies par jour uniquement par recharge solaire, des vitesses maximales, et des autonomies du moteur totale pour différents type de batteries, de moteurs et de panneaux solaires.

Le résultat est qu'il est possible de tendre vers une autonomie totale pour les faibles puissances sur des utilisations jusqu'à 40 minutes par jour uniquement par recharge solaire. Cette autonomie peut suffire à un plaisancier ayant une faible utilisation de son embarcation secondaire mais comporte de vraies limites sur des utilisations intensives telles que la pêche. L'invention des éléments amovibles prend alors tout sont sens dans le cadre du changement de batterie amovible au cours de l'utilisation du moteur.

Nous avons choisi des batteries lithium LiFePO4 d'une capacité de 20A/h pour la motorisation choisie (180W). Avec une batterie de rechange et un panneau solaire amovible, l'utilisateur du SL-One pourra utiliser 3h son moteur électrique.

Avec une utilisation journalière de 40 mn et un panneau solaire amovible le SL-One est totalement autonome et ne nécessite aucune charge extérieure.

Les évolutions technologiques laissent penser que d'ici 5 ans, l'utilisateur du SL-One pourra utiliser un moteur électrique de 4 kWatt pendant 7h30.
Ces nouvelles technologies permettront une totale indépendance énergétique pour une utilisation quotidienne de 40mn

La première revendication de l'invention du SL-One est donc la conception d'un carter de moteur électrique permettant l'intégration facile de batterie et de panneaux solaires dissociables et intégrables au moteur.

Nous revendiquons l'intégration du panneau par deux systèmes distincts; voir PLAN joint : ENS carter_27-01-2014 page 2/3

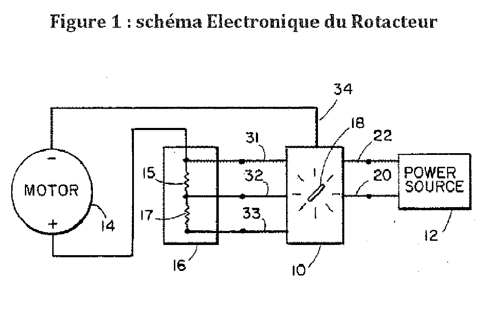

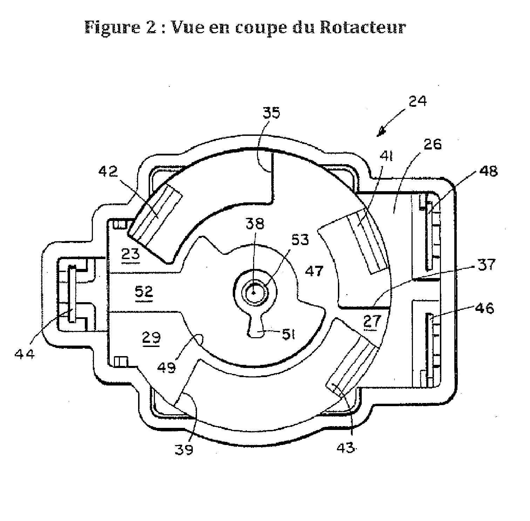

Nous revendiquons la conception d'une carte électronique qui perfectionne le fonctionnement des rotacteurs standards utilisés par la plupart des moteurs hors -bords électriques Ces rotacteurs, objet d'un brevet N° 4894492 (US Patent 6 Janvier 1990), sont universellement utilisés pour faire varier la vitesse des moteurs électriques hors-bords
Ces rotacteurs permettent 5 vitesses avant, 3 vitesses arrière et une position arrêt
Le principe de ces contacteurs consiste à mettre en parallèle ou en série deux résistances pour faire chuter la tension du moteur. Figure 1 & 2
Ces résistances dissipent une forte puissance et sont généralement intégrées au bloc moteur pour être refroidies dans l'eau
Cette solution, qui est très simple, à un très mauvais rendement puisque la variation de vitesse se fait en dissipant de la chaleur.
L'objet de ce brevet et de proposer une solution électronique a modulation d'amplitude (PWM) qui utilise les bornes de ce rotacteur universellement utilisé.
L'électronique détecte chaque position en marche avant et en marche arrière.
Les résistances de puissance ne sont plus nécessaires et le rendement peut atteindre 98%
Le courant passant dans le rotacteur étant très faible, la durée de vie de ce rotacteur est considérablement prolongée.
Figure 3 & 4

### Principe

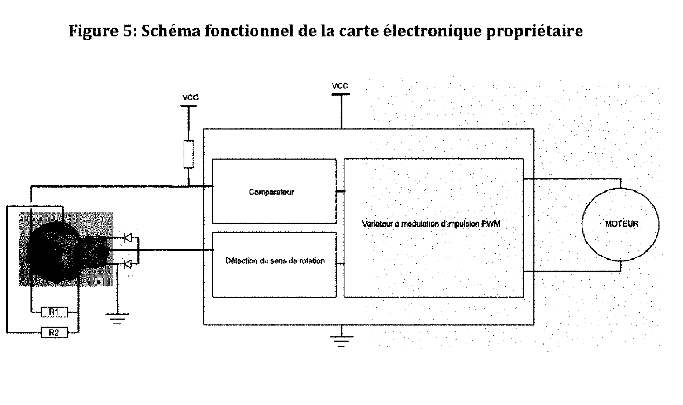

On garde les fonctions internes du rotacteur
1/ La fonction de mise en parallèle/série du rotacteur est utilisée pour fournir une tension variable à un comparateur. Le comparateur contrôle un modulateur d'impulsion de puissance.
2/ La fonction qui inverse l'alimentation batterie est utilisée pour détecter le sens de rotation demandé au moteur. Figure 5
3/ Un modulateur d'impulsion de type PWM contrôle la vitesse et le sens de rotation du moteur Ce type de modulateur peut atteindre un rendement de 98%

Le brevet revendique la possibilité d'intégrer une batterie ou/et un panneau solaire de façon dissociable sur un moteur électrique. Il revendique le création d'un carter innovant permettant l'intégration d'un panneau solaire et de batterie sur un moteur électrique, et la création d'une électronique permettant de garder les rotacteurs standards en améliorant le rendement. Etant donné l'avance technologique des batteries et des panneaux, l'application concerne pour l'instant des embarcations nécessitant de faibles puissances mais pourra très vite concernées des moteurs électriques de puissance plus importantes.

### BREVE DESCRIPTION DES DESSINS

La présente invention sera mieux comprise à l'étude d'un mode de réalisation particulier pris à titre d'exemple nullement limitatif et illustré par les dessins annexés, sur lesquels :
- Figure 1 présente le schéma électronique du Rotacteur, extrait du brevet N°4894492 (US Patent 6 Janvier 1990)
- Figure 2 présente une vue en coupe du rotacteur

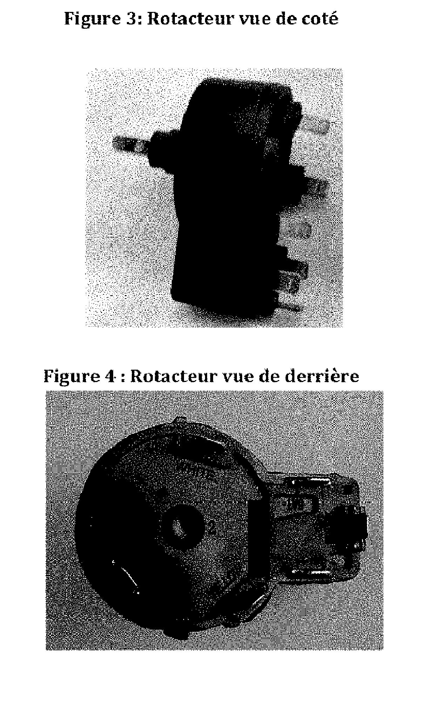

- Figure 3 présente une vue de coté du rotacteur
- Figure 4 présente une vue de derrière du rotacteur
- Figure 5 présente le schéma fonctionnel de la carte électronique propriétaire
- Figure 6 présente le tableau comparatif des autonomies de batteries

## Revendications

1. Un carter de moteur électrique permettant l'intégration de batterie et de panneaux solaires.

2. Une carte électronique propriétaire
